(19) Europäisches Patentamt

European Patent Office

Office européen des brevets

(11) **EP 0 972 802 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.$^7$: **C08L 23/10**, C08L 23/16

(21) Anmeldenummer: **99112029.6**

(22) Anmeldetag: **22.06.1999**

(54) **Heterophasige Polyolefinlegierungen**

Heterophasic olefin polymer material

Polyoléfines hétérophasiques

(84) Benannte Vertragsstaaten:
**BE DE FR IT NL SE**

(30) Priorität: **13.07.1998 DE 19831278**

(43) Veröffentlichungstag der Anmeldung:
**19.01.2000 Patentblatt 2000/03**

(73) Patentinhaber: **Borealis GmbH**
**2323 Schwechat-Mannswörth (AT)**

(72) Erfinder:
• **Rätzsch, Manfred, Prof. Dr.**
**4202 Kirchschlag (AT)**
• **Reichelt, Norbert, Dr.**
**4501 Neuhofen (AT)**
• **Hesse, Achim, Dr.**
**4021 Linz (AT)**
• **Fritz, Hans-Gerhard, Prof. Dr.-Ing.**
**73066 Uhingen (DE)**
• **Bölz, Uwe, Dr**
**41542 Dormagen (DE)**

(74) Vertreter: **VA TECH Patente GmbH & Co**
**Stahlstrasse 21a**
**4031 Linz (AT)**

(56) Entgegenhaltungen:
EP-A- 0 697 438          EP-A- 0 890 612
DE-A- 4 107 635

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft heterophasige Polyolefinlegierungen mit semiinterpenetrierender Netzwerkstruktur und herausragender Kombination von hoher Steifigkeit und Tieftemperaturzähigkeit und gegebenenfalls mit niedrigem Wärmeausdehnungskoeffizienten, bestehend aus Propylenpolymeren und modifizierten Elastomeren, die für die Herstellung von Folien, Fasern, Platten, Beschichtungen, Spritzgußkörpern, Rohren, Hohlkörpern und Schaumstoffen geeignet sind. Die Erfindung betrifft ebenfalls ein Verfahren zur Herstellung dieser heterophasigen Polyolefinlegierungen.

Thermoplastische Elastomere als heterophasige Polyolefinlegierungen hoher Zähigkeit sind bekannt. Bekannte Elastkomponenten für thermoplastische Elastomere auf Basis von Polypropylen sind Ethylen-Propylen-Elastomere (EP 672 712; EP 614940), Ethylen-Propylen-Dien-Elastomere (EP 547 843; EP 409542), Ethylen-Vinylacetat-Copolyere [ BE 899507; Coran, A. Rubber Chem. Technol. 54(1981), 892], chlorsulfoniertes Polyethylen (US 4 141 878), elastomere Copolymere aus Ethylen und $C_4$-$C_8$-Olefinen wie elastomere Ethylen-Buten-Copolymere [Kautschuk-Gummi-Kunststoffe 49(1996)12, 812-813], Ethylen-Hexen-Copolymere oder Ethylen-Octen-Copolymere [Yu, T. , J. Plastic Film&Sheeting 10(1994)1, 539-564] sowie elastomere ataktische Polypropylene (EP 334 829) in Anteilen von 35 bis 70 Masse%, bezogen auf die Polyolefinmischung.

Maßgeblich für die Werkstoffeigenschaften von heterophasigen Polyolefinlegierungen mit Elastomeren wie Festigkeit und Elastizität sind die Zusammensetzung der Polyolefinkomponente und der Elastkomponente und die Verteilung der Elastkomponente in der Polyolefinkomponente (Moore, P., Polypropylene Handbook, Carl Hanser-Verlag München 1996, 218-225).

Bekannt ist weiterhin, in Polyolefinlegierungen auf Basis Polypropylen/ Ethylen-Propylen-Dien-Elastomeren die Elastkomponente durch Zusätze wie Dodecylmercaptan (DE 26 20 820), Schwefel ( EP 336780) oder Tetrabutylthiuramdisulfid (EP 376 213) zu vulkanisieren. Diese Rezepturen haben jedoch den Nachteil einer starken Verfärbung, so daß Halbzeuge und Formstoffe aus diesen Materialien nur schwarz eingefärbt zum Einsatz kommen können.

Heterophasige Polyolefinlegierungen auf Basis von Polypropylenen und elastomeren $C_4$-$C_8$-Olefinen besitzen eine ausgezeichnete Einfärbbarkeit, aber ein bedeutend niedrigeres Festigkeitsniveau gegenüber heterophasigen Polyolefinlegierungen auf Basis von Polypropylenen und vulkanisierten Ethylen-Propylen-Dien-Elastomeren.

Bei Rezepturen aus Polypropylenen und elastomeren Ethylen-Hexen-Copolymeren ist die Modifizierung der Blends durch Elektronenbestrahlung bekannt (JP 96 301 927).

Weiterhin sind die Pfropfung von Polyethylen. sowie von Ethylen-Copolymeren mit ethylenisch ungesättigten hydrolysierbaren Organosilanverbindungen und die hydrolytische Vernetzung dieser Pfropfcopolymeren bekannt (DE 26 11 491; US 36 46 155; GB 14 06 680).

Bekannt ist ebenfalls die Schlagzähmodifizierung von Polypropylenen durch Zusatz von 10-35 Gew. % an amorphen Ethylen-Propylen-Dien-Elastomeren [Michaeli, W., Kunststoffberater (1990)3, 38-43; Kloos, F., Angewandte Makromolekulare Chemie 185/186 (1991), 97-108], Ethylen-Propylen-Elastomeren [Kim, B., J. Applied Polymer Sci. 60(1996), 2207-2218, J. Applied Polymer Sci. 60(1996), 1391-1403], ebenfalls in Form von Reaktorblends aus Polypropylen und Ethylen-Propylen-Kautschuk [Kresge, E., Macromol.Symp. 53 (1992), 173-189, Schwager, H., Kunststoffe 82(1992)6, 499-501], Ethylen-Buten-Elastomeren [Yu, C., SPE-ANTEC'94, 2439-2442; SPE-ANTEC'96, 1995-2000], Ethylen-Hexen-Copolymeren [J 08 301 927, Yamaguchi, M., J. Appl. Polymer Sci. 63(1997), 467-474] und Ethylen-Octen-Elastomeren [EP 0 769 525, J 97 48 920].

Ziel der Erfindung bilden heterophasige Polyolefinlegierungen aus Propylenpolymeren und Elastomeren, die eine hohe Steifigkeit, Tieftemperaturzähigkeit und gegebenenfalls einen niedrigen Wärmeausdehnungskoeffizienten besitzen.

Überraschenderweise wurde gefunden, daß sich durch Schmelzekompoundierung von teilvernetzten Blends, die durch Umsetzung von elastomeren Polyolefinen oder Styrol-Ethylen-Butadien-Terpolymeren bzw. von Mischungen aus Propylenpolymeren und elastomeren Polyolefinen bzw. Styrol-Ethylen-Butadien-Terpolymeren mit ethylenisch ungesättigten hydrolysierbaren Organosilanverbindungen in Gegenwart von Radikalbildnern und Silanolkondensationskatalysatoren hergestellt worden sind, mit einem Überschuß an Propylenpolymeren heterophasige Polyolefinlegierungen mit semiinterpenetrierender Netzwerkstruktur herstellen lassen, die diese Anforderungen erfüllen. Dabei zeigte es sich, daß die gebildeten teilvernetzten elastomeren Polyolefine in der Polypropylenmatrix homogen verteilt als fadenförmig gedehnte Netzwerkstrukturen vorliegen.

Die erfindungsgemäße Aufgabe wurde durch heterophasige Polyolefinlegierungen mit semiinterpenetrierender Netzwerkstruktur und herausragender Kombination von hoher Steifigkeit, Tieftemperaturzähigkeit und gegebenenfalls niedrigem Wärmeausdehnungskoeffizienten aus 65 bis 99,6 Gew.% Propylenpolymeren und 35 bis 0,4 Gew.% elastomeren Polyolefinen bzw. Styrol-Ethylen-Butadien-Terpolymeren und gegebenenfalls 0,01 bis 2,5 Gew.% Stabilisatoren, 0,01 bis 1 Gew.% Verarbeitungshilfsmitteln 0,1 bis 1 Gew.% Antistatika, 0,2 bis 3 Gew.% Pigmenten, 0,05 bis 1 Gew.% Nukleierungsmitteln und/oder 2 bis 20 Gew.% Flammschutzmitteln, jeweils bezogen auf die Summe der Polymeren, als Hilfsstoffe, und/oder gegebenenfalls 10 bis 70 Gew.%, bevorzugt 20 bis 50 Gew.%, bezogen auf die Summe der Polymeren, anorganischen und/ oder organischen Füll- und/oder Verstärkungsstoffen gelöst, wobei die heterophasigen Polyolefinlegierungen erfindungsgemäß einen Gelanteil von

$$G_{HP} = 10^{-2} \, C_B \, [G_B + N \, (100 - G_B)]$$

dabei bedeuten

$G_{HP} =$ Gelanteil der heterophasigen Polyolefinlegierungen in Masse%

$C_B =$ Konzentration des cokontinuierlichen Blends B in der Polyolefinlegierung in Masse%

$G_B =$ Gelanteil des cokontinuierlichen Blends B in Masse%

$N =$ Nachvemetzungsfaktor = 0,10 bis 0,90

besitzen und durch Schmelzekompoundierung von 60 bis 98 Gew.% üblichen Propylenhomopolymeren bzw. Propylencopolymeren A mit Schmelzindices im Bereich von 0,1 bis 50 g/10 min bei 230°C/2,16 kg mit 40 bis 2 Gew.% eines cokontinuierlichen Blends B, gegebenenfalls unter Zusatz von 0,01 bis 0,5 Gew.% Silanolkondensationskatalysatoren und/oder 0,01 bis 0,5 Gew.% Wasser, hergestellt wurden,
und wobei die cokontinuierlichen Blends B auf Basis von

B1) üblichen Propylenpolymeren bzw. Propylencopolymeren mit Schmelzindices im Bereich von 0,1 bis 50 g/10 min bei 230°C/2,16 kg,
die im Gemisch mit 20 bis 90 Gew.% der elastomeren Polyolefine bzw. elastomeren Styren-Ethylen-Butadien-Terpolymeren

B2) Olefincopolymere aus 50 bis 95 Gew.% Ethylen und 50 bis 5 Gew.% Propylen und/oder $\alpha$-Olefinen mit 4 bis 18 C-Atomen und/oder ethylenisch ungesättigten Carbonsäureestern vom Typ Vinylacetat und/oder $C_{1-8}$-Alkyl-(meth)acrylaten mit Schmelzindices von 0,2 bis 30 g/10 min bei 190°C/2,16 kg und/oder

B3) weitgehend amorphe Polypropylene oder Propylen-Copolymere mit einem Anteil an kristallinen Polypropylenen bzw. kristallinen Propylen-Copolymeren unter 10 Masse%, einer Schmelzenthalpie unter 40 J/g und einem Schmelzindex von 0,1 bis 40 g/10 min bei 230°C/2,16 kg, wobei das elastomere weitgehend amorphe Polypropylen ein Homopolymer des Propylens und/oder ein Copolymer des Propylens aus mindestens 80 Mol % Propylen und höchstens 20 Mol % eines oder mehrerer $\alpha$-Olefine der allgemeinen Formel $CH_2$=CHR ist, wobei R ein linearer oder verzweigter Alkylrest mit 2 bis 8 Kohlenstoffatomen ist, und/oder

B5) lineare Triblockcopolymere Styren-Ethylen/Butadien-Styren mit einem Gehalt an Ethylen von 5 bis 45 Masse% und an Styren von 15 bis 45 Masse% und einem Schmelzindex von 0,2 bis 30 g/10 min bei 190°C/2,16 kg,

vorliegen,
die cokontinuierlichen Blends einen Gehalt an chemisch gebundenen ethylenisch ungesättigten hydrolysierbaren Organosilanverbindungen von 0,1 bis 5,0 Gew.% und einen Gelanteil von 5 bis 60 Gew.%, bevorzugt 25 bis 50 Gew.% besitzen, und die Herstellung der cokontinuierlichen Blends B

1) entweder durch Umsetzung von Mischungen aus 10 bis 80 Gew.% üblichen Propylenhomopolymeren bzw. Propylencopolymeren und 90 bis 20 Gew.% elastomeren Polyolefinen bzw. Styrol-Ethylen-Butadien-Terpolymeren mit 0,1 bis 5,0 Gew.% ethylenisch ungesättigten hydrolysierbaren Organosilanverbindungen in Gegenwart von 0,01 bis 1,0 Gew.% thermisch zerfallenden Radikalbildnern, 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in der Schmelze erfolgt ist,

2) oder durch Umsetzung von Mischungen aus 6 bis 66 Gew.% üblichen Propylenhomopolymeren bzw. Propylencopolymeren und 94 bis 33 Gew.% elastomeren Polyolefinen bzw. Styrol-Ethylen-Butadien-Terpolymeren mit 0,1 bis 5,0 Gew.%, bezogen auf die elastomeren Polyolefine bzw. Styrol-Ethylen-Butadien-Terpolymere, an ethylenisch ungesättigten hydrolysierbaren Organosilanverbindungen in Gegenwart von 0,01 bis 1,0 Gew.%, bezogen auf die elastomeren Polyolefine bzw. Styrol-Ethylen-Butadien-Terpolymere, thermisch zerfallenden Radikalbildnern in der Schmelze und Zugabe von weiteren 5 bis 40 Gew. %, bezogen auf die Polymermischung, üblichen Propylenhomopolymeren bzw. Propylencopolymeren und 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in der Schmelze erfolgt ist,

3) oder durch Umsetzung von elastomeren Polyolefinen bzw. Styrol-Ethylen-Butadien-Terpolymeren mit 0,1 bis 5,0 Gew.% ethylenisch ungesättigten hydrolysierbaren Organosilanverbindungen in Gegenwart von 0,01 bis 1,0 Gew.%, bezogen auf die elastomeren Polyolefine bzw. Styrol-Ethylen-Butadien-Terpolymere, thermisch zerfallenden Radikalbildnern in der Schmelze, nachfolgender Granulierung und anschließender Schmelzecompoundierung von Mischungen aus 90 bis 20 Gew.% dieser modifizierten elastomeren Polyolefine bzw. Styrol-Ethylen-Butadien-Terpolymeren und 10 bis 80 Gew.% üblichen Propylenhomopolymeren bzw. Propylencopolymeren in Gegenwart von 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, erfolgt ist,

und wobei die üblichen Propylenhomopolymere bzw. Propylencopolymere A und die üblichen Propylenhomopolymere bzw. Propylencopolymere B1) gleich oder verschieden sein können.

Bevorzugt werden als übliche Propylenhomopolymere bzw. Propylencopolymere A bzw. B1) unter Anwendung von Ziegler-Natta-Katalysatoren oder Metallocenkatalysatoren hergestellte Propylenhomopolymere und/oder Copolymere aus Propylen, Ethylen und/oder $\alpha$-Olefinen mit 4 bis 18 C-Atomen mit einem Propylengehalt von 80,0 bis 99,9 Gew.% in Form von statistischen Copolymeren, Blockcopolymeren und/oder statistischen Blockcopolymeren mit Schmelzindices von 0,1 bis 50 g/10 min bei 230°C/2,16 kg, bevorzugt 0,2 bis 15 g/10 min bei 230°C/2,16 kg, eingesetzt. Besonders geeignet sind dabei Propylen-Homopolymere mit bimodaler Molmassenverteilung, Molmassen-Gewichtsmitteln $M_w$ von 500000 bis 1500000 g/mol, Molmassen-Zahlenmitteln $M_n$ von 25000 bis 100000 g/mol und $M_w/M_n$ -Werten von 2 bis 60, die in einer Reaktorkaskade hergestellt wurden.

Die für die Herstellung der cokontinuierlichen Blends B eingesetzten weitgehend amorphen Polypropylene oder Propylen-Copolymere B3) sind insbesondere Stereoblock-Polypropylene, die beispielsweise unter Anwendung hochaktiver, Metalloxidfixierter Ziegler-Natta-Katalysatoren [Collette, J., Macromolecules 22 (1989), 3851-3858; DE 2830160] oder löslicher Ziegler-Natta-Katalysatoren [de Candia, F., Makromol. Chem. 189 (1988), 815-821], gegebenenfalls unter nachfolgender Reaktivmodifizierung ( EP 636863) und/oder Degradation (EP 640 850), hergestellt werden.

Die in den cokontinuierlichen Blends B chemisch gebunden vorliegenden ethylenisch ungesättigten hydrolysierbaren Organosilanverbindungen sind bevorzugt $C_3$-$C_8$-Alkenyl-$C_1$-$C_2$-alkoxysilane, $C_2$-$C_{14}$-Alkenyl-halogensilane, Amino-$C_2$-$C_5$-alkenylsilane, $C_6$-$C_8$-Cycloalkenylsilane, Methacryloxy - $C_1$-$C_3$-alkylsilane, Styryl- $C_1$-$C_2$-alkoxysilane, Vinyl-$C_1$-$C_4$-alkoxy-silane und/oder Vinyl-$C_1$-$C_8$-carboxysilane, insbesondere Vinyltrimethoxysilan und/oder Vinyltriethoxysilan.

Die Gelanteile der cokontinuierlichen Blends B bzw. der heterophasigen Polyolefinlegierungen wurden entsprechend DIN 53 738 durch 16 h Heißextraktion mit Xylen ermittelt.

Die Bestimmung des thermischen Längenausdehnungskoeffizienten erfolgte nach einer Probeentnahme aus dem Mittelbereich der Zugstäbe jeweils längs und quer zur Spritzrichtung. Die Versuchsparametra betrugen : Temperatur 5 bis 95°C, Probenlänge rd. 7 mm, Heizrate 3 K/min, Anpreßkraft 0,02 N, Anpreßdruck 0,02 N/mm, Spülgas Stickstoff.

Die in den heterophasigen Polyolefinlegierungen gegebenenfalls enthaltenen Hilfsstoffe sind 0,01 bis 2,5 Masse% Stabilisatoren, 0,1 bis 1 Masse% Antistatika, 0,2 bis 3 Masse% Pigmente, 0,05 bis 1 Masse% Nukleierungsmittel und/oder 2 bis 20% Flammschutzmittel, jeweils bezogen auf die eingesetzten Polyolefine.

Als Stabilisatoren können in den heterophasigen Polyolefinlegierungen gegebenenfalls bevorzugt Mischungen aus 0,01 bis 0,6 Masse% phenolischen Antioxidantien, 0,01 bis 0,6 Masse% Verarbeitungsstabilisatoren auf Basis von Phosphiten, 0,01 bis 0,6 Masse% 3-Arylbenzofuranonderivate, 0,01 bis 0,6 Masse% Hochtemperaturstabilisatoren auf Basis von Disulfiden und Thioäthern und/oder 0,01 bis 0,8 Masse% sterisch gehinderte Amine (HALS), jeweils bezogen auf die eingesetzten Polyolefine, enthalten sein.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylenbis(6-tert.butyl-4-methylphenol), 4,4'-Thio-bis-(6-tert.butyl-2-methylphenol), 3(3,5-Ditert.butyl - 4 - hydroxyphenyl)propionsäureoctadecylester, 1,3,5 - Trimethyl- 2,4,6-tris(3', 5'di-tert.butyl-4-hydroxybenzyl)benzen und/oder Pentaerythritol-tetrakis[3-(3,5-di-tert.buty)-4-hydroxyphenyl)]propionat.

Als HALS-Verbindungen sind Bis-2,2,6,6-tetramethyl-4-piperidylsebazat und/oder Poly - ([1 ,1 , 3,3,-tetramethylbutyl)-imino] - 1,3,5- triazin - 2,4,diyl) [2,2,6,6-tetramethylpiperidyl)-amino]-hexamethylen-4-(2,2,6,6-tetramethyl)piperidyl)-imino] besonders geeignet.

Als Verarbeitungshilfsmittel können in den heterophasigen Polyolefinlegierungen gegebenenfalls bevorzugt Calciumstearat, Magnesiumstearat und/oder Wachse enthalten sein.

Als Nukleierungsmittel können in den heterophasigen Polyolefinlegierungen gegebenenfalls bevorzugt $\alpha$-Nukleierungsmittel wie Talkum oder das Natriumsalz der Methylen-bis(2,4-di-tert.butylphenol)phosphorsäure oder $\beta$-Nukleierungsmittel wie Adipinsäuredianilid, Dibenzochinacridon oder N,N'-Dicyclohexyl-2,6-naphthalindicarboxamid enthalten sein.

Die in den heterophasigen Polyolefinlegierungen gegebenenfalls enthaltenen Füllstoffe sind bevorzugt $Al_2O_3$, $Al(OH)_3$, Bariumsulfat, Calciumcarbonat, Glaskugeln, Holzmehl, Kieselerde, Mikrohohlkugeln, Ruß, Talkum und/oder Wollastonit.

Die in den heterophasigen Polyolefinlegierungen gegebenenfalls enthaltenen Verstärkerstoffe sind bevorzugt Aramidfasem, Cellulosefasern, Flachs, Jute, Kenaf, Glasfasern, Glasmatten, Mikrofasern aus flüssigkristallinen Polymeren und/oder Polytetrafluorethylen-Fasern.

Die heterophasigen Polyolefinlegierungen mit semiinterpenetrierender Netzwerkstruktur und herausragender Kombination von hoher Steifigkeit, Tieftemperaturzähigkeit und gegebenenfalls niedrigem Wärmeausdehnungskoeffizienten aus 65 bis 99,6 Gew.% Propylenpolymeren und 35 bis 0,4 Gew. % elastomeren Polyolefinen bzw. Styrol-Ethylen-Butadien-Terpolymeren und gegebenenfalls 0,05 bis 25 Masse% Hilfsstoffen und/oder 10 bis 70 Gew.%, jeweils bezogen auf die Summe der Polymeren, Füll- und/oder Verstärkungsstoffen werden erfindungsgemäß durch Schmelzekompoundierung von 60 bis 98 Gew.% üblichen Propylenhomopolymeren bzw. Propylencopolymeren A mit 40 bis 2 Gew.% eines cokontinuierlichen Blends B, gegebenenfalls unter Zusatz von 0,01 bis 0,5 Gew.% Silanolkondensationskatalysatoren und/oder 0,01 bis 0,5 Gew. % Wasser, bevorzugt unter kontinuierlicher Zugabe der Propylenhomopolymeren bzw. Propylencopolymeren zu den cokontinuierlichen Blends B, bei Temperaturen von 120 bis 270°C, vorzugsweise bei 200 bis 240°C, hergestellt,

wobei die cokontinuierlichen Blends B auf Basis von

> B1) üblichen Propylenhomopolymeren bzw. Propylencopolymeren mit Schmelzindices im Bereich von 0,1 bis 50 g/10 min bei 230°C/2,16 kg,
> die im Gemisch mit 20 bis 90 Gew.% der elastomeren Polyolefine bzw. elastomeren Styrol-Ethylen-Butadien-Terpolymeren

> B2) Olefincopolymere aus 50 bis 95 Gew.% Ethylen und 50 bis 5 Gew.% Propylen und/oder $\alpha$-Olefinen mit 4 bis 18 C-Atomen und/oder ethylenisch ungesättigten Carbonsäureestern vom Typ Vinylacetat und/oder $C_{1-8}$-Alkyl-(meth)acrylaten mit Schmelzindices von 0,2 bis 30 g/10 min bei 190°C/2,16 kg und/oder

> B3) weitgehend amorphe Polypropylene oder Propylen-Copolymere mit einem Anteil an kristallinen Polypropylenen bzw. kristallinen Propylen-Copolymeren unter 10 Masse% , einer Schmelzenthalpie unter 40 J/g und einem Schmelzindex von 0,1 bis 40 g/10 min bei 230°C/2,16 kg, wobei das elastomere weitgehend amorphe Polypropylen ein Homopolymer des Propylens und/oder ein Copolymer des Propylens aus mindestens 80 Mol % Propylen und höchstens 20 Mol % eines oder mehrerer $\alpha$-Olefine der allgemeinen Formel $CH_2$=CHR ist, wobei R ein linearer oder verzweigter Alkylrest mit 2 bis 8 Kohlenstoffatomen ist,

> B5) lineare Triblockcopolymere Styrol-Ethylen/Butadien-Styrol mit einem Gehalt an Ethylen von 5 bis 45 Masse% und an Styrol von 15 bis 45 Masse% und einem Schmelzindex von 0,2 bis 30 g/10 min bei 190°C/2,16 kg,

vorliegen,

> 1) entweder durch Umsetzung von Mischungen aus 10 bis 80 Gew.% üblichen Propylenhomopolymeren bzw. Propylencopolymeren und 90 bis 20 Gew. % elastomeren Polyolefinen bzw. Styrol-Ethylen-Butadien-Terpolymeren mit 0,1 bis 5,0 Gew.% ethylenisch ungesättigten hydrolysierbaren Organosilanverbindungen in Gegenwart von 0,01 bis 1,0 Gew.% thermisch zerfallenden Radikalbildnern mit Halbwertszeiten von 1 min bis 48 h bei 130°C, 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in kontinuierlichen Knetern in der Schmelze bei Temperaturen von 120 bis 270°C, vorzugsweise bei 200 bis 240°C, und Drücken von 1 bis 300 bar, vorzugsweise von 1 bis 30 bar, bei Verweilzeiten von 0,5 bis 40 min, vorzugsweise von 1 bis 15 min, hergestellt werden,

> 2) oder durch Umsetzung von Mischungen aus 6 bis 66 Gew.% üblichen Propylenhomopolymeren bzw. Propylencopolymeren und 94 bis 33 Gew.% elastomeren Polyolefinen bzw. Styrol-Ethylen-Butadien-Terpolymeren mit 0,1 bis 5,0 Gew.%, bezogen auf die elastomeren Polyolefine bzw. Styrol-Ethylen-Butadien-Terpolymere, an ethylenisch ungesättigten hydrolysierbaren Organosilanverbindungen in Gegenwart von 0,01 bis 1,0 Gew.%, bezogen auf die elastomeren Polyolefine bzw. Styrol-Ethylen-Butadien-Terpolymere, thermisch zerfallenden Radikalbildnern mit Halbwertszeiten von 1 min bis 48 h bei 130°C in der Schmelze und Zugabe von weiteren 5 bis 40 Gew.%, bezogen auf die Polymermischung, üblichen Propylenhomopolymeren bzw. Propylencopolymeren und 0,01 bis 1,0 Gew. % Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in kontinuierlichen Knetem in der Schmelze bei Temperaturen von 120 bis 270°C, vorzugsweise bei 200 bis 240°C, und Drücken von 1 bis 300 bar, vorzugsweise von 1 bis 30 bar, bei Verweilzeiten von 0,5 bis 40 min, vorzugsweise von 1 bis 15 min, hergestellt werden,

> 3) oder durch Umsetzung von elastomeren Polyolefinen bzw. Styrol-Ethylen-Butadien-Terpolymeren mit 0,1 bis 5,0 Gew.% ethylenisch ungesättigten hydrolysierbaren Organosilanverbindungen in Gegenwart von 0,01 bis 1,0 Gew.%, bezogen auf die elastomeren Polyolefine bzw. Styrol-Ethylen-Butadien-Terpolymere. thermisch zerfallenden Radikalbildnern mit Halbwertszeiten von 1 min bis 48 h bei 130°C in kontinuierlichen Knetem in der Schmelze bei Temperaturen von 120 bis 270°C, vorzugsweise bei 200 bis 240°C, und Drücken von 1 bis 300 bar, vorzugsweise von 1 bis 30 bar, bei Verweilzeiten von 0,5 bis 40 min, vorzugsweise von 1 bis 15 min, hergestellt werden, wobei nachfolgend eine Granulierung und eine anschließende Schmelzecompoundierung von Mischungen aus 90 bis 20 Gew. % dieser modifizierten elastomeren Polyolefine bzw. Styrol-Ethylen-Butadien-Terpolymeren und 10 bis 80 Gew.% üblichen Propylenhomopolymeren bzw. Propylencopolymeren in Gegenwart von 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in kontinuierlichen Knetern in der Schmelze bei Temperaturen von 120 bis 270°C, vorzugsweise bei 200 bis 240°C, vorgenommen wird,

wobei ein Zusatz von 0,01 bis 2,5 Gew.% Stabilisatoren, 0,01 bis 1 Gew. % Verarbeitungshilfsmitteln, 0,1 bis 1 Gew.% Antistatika, 0,2 bis 3 Gew.% Pigmenten, 0,05 bis 1 Gew.% Nukleierungsmitteln und 2 bis 20 Gew.% Flammschutzmitteln, jeweils bezogen auf die Summe der Polymeren, als Hilfsstoffe, und/oder 10 bis 70 Gew. %, bevorzugt 20 bis 50 Gew.%, bezogen auf die Summe der Polymeren, anorganischen und/oder organischen Füll- und/oder Verstärkungsstoffen, bei der Herstellung der cokontinuierlichen Blends B und/oder bei der nachfolgenden Erzeugung der heterophasigen Polyolefinlegierungen erfolgen kann,
und wobei die üblichen Propylenhomopolymere bzw. Propylencopolymere A und die üblichen Propylenhomopolymere bzw. Propylencopolymere B1) gleich oder verschieden sein können.

Als kontinuierliche Kneter sind bevorzugt Ein- und Doppelschneckenextruder, Scheibenextruder und Walzwerke geeignet.

Bevorzugt eingesetzte thermisch zerfallende Radikalbildner bei der Herstellung der cokontinuierlichen Blends B sind Peroxide, die bei einer Temperatur von 180 bis 200°C eine Halbwertszeit von 30 s bis 3 min aufweisen, insbesondere Dicumylperoxid, Cumyl-tert. butylperoxid, Di-tert.butylperoxid und/oder 2,5-Dimethyl-2,5-(ditert.butylperoxy)hexan.

Als Silanolkondensationskatalysatoren werden bei der Herstellung der cokontinuierlichen Blends B und gegebenenfalls der heterophasigen Polyolefinlegierungen bevorzugt Oxide, Hydroxide und/oder Carbonsäuresalze der Metalle Sn, Ti, Zn, Zr, Fe, Cu und/oder Pb, besonders bevorzugt Dibutylzinndilaurat, Dibutylzinndioktoat und/oder $C_1$- bis $C_{12}$-Dialkylzinnoxide, eingesetzt. Bei der Herstellung der cokontinuierlichen Blends B bewirkt die Sorption der Silanolkondensationskatalysatoren weiterhin eine exzellente Vorverteilung der thermisch zerfallenden Radikalbildner und ethylenisch ungesättigten hydrolysierbaren Organosilanverbindungen.

Ein bevorzugtes Verfahren zur Dosierung der verwendeten ethylenisch ungesättigten hydrolysierbaren Organosilanverbindungen, Radikalbildner und Silanolkondensationskatalysatoren besteht darin, diese Komponenten in Innenmischern wie Rhönradmischern auf die elastomeren Polyolefine bzw. Styrol-Ethylen-Butadien-Terpolymere aufzutrommeln.

Eine Beschleunigung der Gelbildung in den cokontinuierlichen Blends B läßt sich durch Zugabe geringer Wassermengen, insbesondere durch Zugabe von befeuchtetem Polypropylen über eine Seitenstromdosierung, erzielen.

Bei einer bevorzugten Variante des Verfahrens zur Herstellung der heterophasigen Polyolefinblends wird die Herstellung der cokontinuierlichen Blends B und die nachfolgende Erzeugung der heterophasigen Polyolefinlegierungen in einer Extruderkaskade aus 2 Doppelschneckenextrudern, insbesondere gleichsinnig drehenden dichtkämmenden Zweischneckenextrudem, als kontinuierliche Kneter durchgeführt, wobei im 1.Extruder bei Massetemperaturen von 190 bis 250°C die Umsetzung der Mischungen aus Propylenhomopolymeren bzw. Propylencopolymeren, elastomeren Polyolefinen bzw. Styrol-Ethylen-Butadien-Terpolymeren und ethylenisch ungesättigten hydrolysierbaren Organosilanverbindungen, gegebenenfalls unter Seitenstromdosierung der Propylenhomopolymeren bzw. Propylencopolymeren, zu den cokontinuierlichen Blends B, und nachfolgend im 2. Extruder die Erzeugung der heterophasigen Polyolefinlegierungen durch Homogenisierung der cokontinuierlichen Blends B mit einem Überschuß an Propylenhomopolymeren bzw. Propylencopolymeren, gegebenenfalls unter Zusatz von 0,01 bis 0,5 Gew.% Silanolkondensationskatalysatoren und/oder 0,01 bis 0,5 Gew.% Wasser, bei Massetemperaturen von 190 bis 250°C bei hohen Deformationsgeschwindigkeiten erfolgt.

Eine weitere bevorzugte Variante des Verfahrens zur Herstellung heterophasiger Polyolefinlegierungen besteht darin, daß die Herstellung der cokontinuierlichen Blends B und die nachfolgende Erzeugung der heterophasigen Polyolefinlegierungen in einem Doppelschneckenextruder mit L/D von 32 bis 60, bevorzugt in einem gleichsinnig drehenden dichtkämmenden Zweischneckenextruder mit UD von 40 bis 60, erfolgt, wobei die Umsetzung der Mischungen aus Propylenhomopolymeren bzw. Propylencopolymeren, elastomeren Polyolefinen bzw. Styrol-Ethylen-Butadien-Terpolymeren und ethylenisch ungesättigten hydrolysierbaren Organosilanverbindungen zu den cokontinuierlichen Blends B in den ersten 50 bis 75% Verfahrenslänge der Extruderbaugruppen, und die Erzeugung der heterophasigen Polyolefinlegierungen durch Homogenisierung der cokontinuierlichen Blends B mit einem Überschuß an Propylenhomopolymeren bzw. Propylencopolymeren A unter Seitenstromdosierung der Propylenhomopolymeren bzw. Propylencopolymeren A, gegebenenfalls unter Zusatz von 0,01 bis 0,5 Gew.% Silanolkondensationskatalysatoren und/oder 0,01 bis 0,5 Gew.% Wasser, in den letzten 25 bis 50% Verfahrenslänge der Extruderbaugruppen erfolgt.

Die heterophasigen Polyolefinlegierungen sind insbesondere für die Herstellung von Folien, Fasern, Platten, Beschichtungen, Spritzgußkörpern, Rohren, Hohlkörpern und Schaumstoffen geeignet.

Die Erfindung wird durch nachfolgende Beispiele erläutert :

Beispiel 1

Herstellung des cokontinuierlichen Blends B

In den Einzugtrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 190/220/240/ 240/240/240/240/230/220/210/200 °C, Drehzahl 120 U/ min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 1,05 kg/h und ein Ethylen-Propylen-Copolymer (Exxon Vistalon 606, Gehalt an Ethylen 48%, Mooney-Viscosität 65 bei 125°C), auf das im Rhönradmischer 2 Masse% Vinyltrimethoxysilan, 0,075 Masse% Dicumylperoxid und 0,05 Masse% Dibutylzinndilaurat, jeweils bezogen auf das Ethylen-Propylen-Copolymer, mit 2,45 kg/h dosiert, aufgeschmolzen, homogenisiert, mit dem in der Reaktionsmischung enthaltenen Vinylsilan umgesetzt, entgast, bei einer Schmelzetemperatur von 219°C ausgetragen und granuliert.

Das resultierende cokontinuierliche Blend B besitzt einen Gehalt an gebundenem Vinyltrimethoxysilan von 1,65 Masse% und einen Gelanteil von 58 Masse%.

Herstellung der heterophasigen Polyolefinlegierung

In den Einzugtrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 190/210/230/ 230/230/230/220/220/210/200/190 °C, Drehzahl 200 U/ min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 2,8 kg/h und ein cokontinuierliches Blend B (Gehalt an gebundenem Vinyltrimethoxysilan 1,65 Masse%, Gelanteil 58 Masse%) mit 1,2 kg/h dosiert, unter hohen Deformationsgeschwindigkeiten homogenisiert, entgast, bei einer Schmelzetemperatur von 217°C ausgetragen und granuliert. Die resultierende heterophasige Polyolefinlegierung besitzt einen Gelanteil von 20%.

Durch Spritzgießen hergestellte Prüfkörper nach DIN ISO 3167 A besitzen folgende Eigenschaften:

Kerbschlagzähigkeit (Charpy) bei -20°C: 8,4 kJ/m$^2$
Zug - E-Modul : 1370 MPa
maximale Zugfestigkeit ($\sigma_{max}$) : 25 MPa
maximale Dehnbarkeit ($\varepsilon_{max}$) : 75%
Thermischer Längenausdehnungskoeffizient $\alpha$ [ 10$^{-6}$ K$^{-1}$ ]:
Probenentnahme längs zur Spritzrichtung : 94
Probenentnahme quer zur Spritzrichtung : 167

Beispiel 2

Herstellung des cokontinuierlichen Blends B

In den Einzugtrichter eines gleichsinnig drehenden, dichtkämmenden Zweischneckenextruders (Fa. Berstorff, ZE 25) mit gekühlter Einzugszone, Vacuumentgasung, UD=48, Temperaturprofil 200/215/230/ 240/240/240/240/230/230/220/210 °C, Drehzahl 120 U/ min, wird ein Polypropylen-Homopolymer (Daplen BE 50, Schmelzindex 0,25 g/10 min bei 230°C/2,16 kg, $\rho$= 0,905 g/cm$^3$ bei 20°C) mit 0,80 kg/h und ein Ethylen-Propylen-Copolymer (Exxon Vistalon 606, Gehalt an Ethylen 48%, Mooney-Viscosität 65 bei 125°C), auf das im Rhönradmischer 2 Masse% Vinyltrimethoxysilan, 0,2 Masse% Dicumylperoxid und 0,25 Masse% Dibutylzinndilaurat, jeweils bezogen auf das Ethylen-Propylen-Copolymer, mit 2,4 kg/h dosiert, aufgeschmolzen, homogenisiert, mit dem in der Reaktionsmischung enthaltenen Vinylsilan umgesetzt, entgast, bei einer Schmelzetemperatur von 227°C ausgetragen und granuliert.

Das resultierende cokontinuierliche Blend B besitzt einen Gehalt an gebundenem Vinyltrimethoxysilan von 1,75 Masse% und einen Gelanteil von 62 Masse%

Herstellung der heterophasigen Polyolefinlegierung

In den Einzugtrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 200/215/230/ 240/240/240/230/230/220/210/200 °C, Drehzahl 230 U/ min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 3,0 kg/h und ein cokontinuierliches Blend B (Gehalt an gebundenem Vinyltrimethoxysilan 1,75 Masse%, Gelanteil 62 Masse %) mit 1,0 kg/h dosiert, unter hohen Deformationsgeschwindigkeiten homogenisiert, entgast, bei einer Schmelzetemperatur von 220°C ausgetragen und granuliert. Die resultierende heterophasige Polyolefinlegierung besitzt einen Gelanteil von 17,5%.

Durch Spritzgießen hergestellte Prüfkörper nach DIN ISO 3167 A besitzen folgende Eigenschaften:

Kerbschlagzähigkeit (Charpy) bei -20°C: 10,2 kJ/m$^2$

Zug - E-Modul : 1200 MPa

maximale Zugfestigkeit ($\sigma_{max}$) 23,8 MPa

maximale Dehnbarkeit ($\varepsilon_{max}$) : 380%

Beispiel 3

Herstellung des cokontinuierlichen Blends B

In den Einzugstrichter eines gleichsinnig drehenden, dichtkämmenden Zweischneckenextruders (Fa. Berstorff, ZE 25) mit gekühlter Einzugszone, Vacuumentgasung, UD=48, Seitenstromdosierung bei 30 D, Temperaturprofil 190/220/240/240/240/240/240/230/220/210/200 °C, Drehzahl 120 U/min, wird ein Ethylen-Propylen-Copolymer (Exxon Vistalon 606, Gehalt an Ethylen 48%, Mooney-Viscosität 65 bei 125°C), auf das im Rhönradmischer 2 Masse% Vinyltrimethoxysilan, 0,15 Masse% Dicumylperoxid und 0,30 Masse% Dibutylzinndilaurat, jeweils bezogen auf das Ethylen-Propylen-Copolymer, mit 1,8 kg/h und ein Polypropylen-Homopolymer (Daplen K2XMOD, Schmelzindex 8,0 g/10 min bei 230°C/2,16 kg, $\rho$= 0,905 g/cm$^3$ bei 20°C) mit 0,8 kg/h dosiert, aufgeschmolzen, homogenisiert, mit dem in der Reaktionsmischung enthaltenen Vinylsilan in Reaktion gebracht, mit dem über die Seitenstromdosierung bei 30D mit 1,4 kg/h zugeführten Polypropylen-Homopolymer (Dapien K2XMOD, Schmelzindex 8,0 g/10 min bei 230°C/2,16 kg, $\rho$= 0,905 g/cm$^3$ bei 20°C) homogenisiert, entgast, bei einer Schmelzetemperatur von 217°C ausgetragen und granuliert.

Das resultierende cokontinuierliche Blend B besitzt einen Gehalt an gebundenem Vinyltrimethoxysilan von 1,8 Masse% und einen Gelanteil von 65 Masse%.

Herstellung der heterophasigen Polyolefinlegierung

In den Einzugstrichter eines gleichsinnig drehenden, dichtkämmenden Zweischneckenextruders (Fa. Berstorff, ZE 25) mit gekühlter Einzugszone, Vacuumentgasung, UD=48, Temperaturprofil 190/210/230/230/230/230/220/220/210/200/190 °C, Drehzahl 200 U/min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 2,9 kg/h und ein cokontinuierliches Blend B (Gehalt an gebundenem Vinyltrimethoxysilan 1,8 Masse%, Gelanteil 65 Masse %) mit 2,4 kg/h dosiert, unter hohen Deformationsgeschwindigkeiten homogenisiert, entgast; bei einer Schmelzetemperatur von 197°C ausgetragen und granuliert. Die resultierende heterophasige Polyolefinlegierung besitzt einen Gelanteil von 31%.

Durch Spritzgießen hergestellte Prüfkörper nach DIN ISO 3167 A besitzen folgende Eigenschaften:

Kerbschlagzähigkeit (Charpy) bei -20°C: 8,4 kJ/m$^2$

Zug - E-Modul :1350 MPa

maximale Zugfestigkeit ($\sigma_{max}$) : 22,4 MPa maximale Dehnbarkeit ($\varepsilon_{max}$) : 190%

Beispiel 4

Herstellung des cokontinuierlichen Blends B

In den Einzugstrichter eines gleichsinnig drehenden, dichtkämmenden Zweischneckenextruders (Fa. Berstorff, ZE 25) mit gekühlter Einzugszone, Vacuumentgasung, L/D=48, Seitenstromdosierung bei 30 D, Temperaturprofil 190/220/240/240/240/240/240/230/220/210/200 °C, Drehzahl 150 U/min, wird ein Ethylen-Octen-Copolymer (Dow Engage 8200, Gehalt an Octen 28%, Schmelzindex 5g/10 min bei 190°C/2,16 kg, $\rho$=0,870 g/cm$^3$), auf das im Rhönradmischer 2 Masse% Vinyltrimethoxysilan, 0,1 Masse% Dicumylperoxid und 0,20 Masse% Dibutylzinndilaurat, jeweils bezogen auf das Ethylen-Octen-Copolymer, mit 1,8 kg/h und ein Polypropylen-Homopolymer (Daplen K2XMOD, Schmelzindex 8,0 g/10 min bei 230°C/2,16 kg, $\rho$= 0,905 g/cm$^3$ bei 20°C) mit 0,8 kg/h dosiert, aufgeschmolzen, homogenisiert, mit dem in der Reaktionsmischung enthaltenen Vinylsilan in Reaktion gebracht, mit dem über die Seitenstromdosierung bei 30D mit 1,4 kg/h zugeführten Polypropylen-Homopolymer (Daplen K2XMOD, Schmelzindex 8,0 g/10 min bei 230°C/2,16 kg, $\rho$= 0,905 g/cm$^3$ bei 20°C) homogenisiert, entgast, bei einer Schmelzetemperatur von 217°C ausgetragen und granuliert.

Das resultierende cokontinuierliche Blend B besitzt einen Gehalt an gebundenem Vinyltrimethoxysilan von 1,62 Masse% und einen Gelanteil von 57 Masse%.

Herstellung der heterophasigen Polyolefinlegierung

In den Einzugstrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 190/210/230/230/230/230/220/220/210/200/190 °C, Drehzahl 200 U/min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 4,0 kg/h und ein cokontinuierliches Blend B (Gehalt an gebundenem Vinyltrimethoxysilan 1,62 Masse%, Gelanteil von 57 Masse%) mit 1,8 kg/h dosiert, unter hohen Deformationsgeschwindigkeiten homogenisiert, entgast, bei einer Schmelzetemperatur von 205°C ausgetragen und granuliert. Die resultierende heterophasige Poly-olefinlegierung besitzt einen Gelanteil von 21%.

Durch Spritzgießen hergestellte Prüfkörper nach DIN ISO 3167 A besitzen folgende Eigenschaften :

Kerbschlagzähigkeit (Charpy) bei -20°C : 5,0 kJ/m$^2$

Zug - E-Modul:1.680 MPa

maximale Zugfestigkeit ($\sigma_{max}$) : 28,8 MPa

maximale Dehnbarkeit ($\varepsilon_{max}$) : 96%

Thermischer Längenausdehnungskoeffizient $\alpha$ [$10^{-6}$ K$^{-1}$] :

Probenentnahme längs zur Spritzrichtung : 90

Probenentnahme quer zur Spritzrichtung : 164

Beispiel 5

Herstellung des cokontinuierlichen Blends B

In den Einzugstrichter eines gleichsinnig drehenden, dichtkämmenden Zweischneckenextruders (Fa. Berstorff, ZE 25) mit gekühlter Einzugszone, Vacuumentgasung, UD=48, Seitenstromdosierung bei 30 D, Temperaturprofil 190/220/240/240/240/240/240/230 /220/210/200 °C, Drehzahl 120 U/min, wird ein Ethylen-Propylen-Copolymer (Exxon Vistalon 606, Gehalt an Ethylen 48%, Mooney-Viscosität 65 bei 125°C), auf das im Rhönradmischer 2 Masse% Vinyltriethoxysilan, 0,15 Masse% Di-tert.butylperoxid und 0,30 Masse% Dibutylzinndioktoat, jeweils bezogen auf das Ethylen-Propylen- Copolymer, mit 1,8 kg/h und ein Polypropylen-Homopolymer (Daplen K2XMOD, Schmelzindex 8,0 g/10 min bei 230°C/2,16 kg, $\rho$= 0,905 g/cm$^3$ bei 20°C) mit 0,8 kg/h dosiert, aufgeschmolzen, homogenisiert, mit dem in der Reaktionsmischung enthaltenen Vinylsilan in Reaktion gebracht, mit dem über die Seitenstromdosierung bei 30D mit 1,4 kg/h zugeführten Polypropylen-Homopolymer (Daplen K2XMOD, Schmelzindex 8,0 g/ 10 min bei 230°C/2,16 kg, $\rho$= 0,905 g/cm$^3$ bei 20°C) homogenisiert, entgast, bei einer Schmelzetemperatur von 219°C ausgetragen und granuliert.

Das resultierende cokontinuierliche Blend B besitzt einen Gehalt an gebundenem Vinyltrimethoxysilan von 1,80 Masse% und einen Gelanteil von 62%.

Herstellung der heterophasigen Polyolefinlegierung

In den Einzugstrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 190/210/230/ 230/230/230/220/220/210/200/190 °C, Drehzahl 200 U/ min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 4,0 kg/h und ein cokontinuierliches Blend B (Gehalt an gebundenem Vinyltrimethoxysilan 1,80 Masse%, Gelanteil von 62%) mit 1,8 kg/h dosiert, unter hohen Deformationsgeschwindigkeiten homogenisiert, entgast, bei einer Schmelzetemperatur von 205°C ausgetragen und granuliert. Die resultierende heterophasige Polyolefinlegierung besitzt einen Gelanteil von 22%.

Durch Spritzgießen hergestellte Prüfkörper nach DIN ISO 3167 A besitzen folgende Eigenschaften:

Kerbschlagzähigkeit (Charpy) bei -20°C : 6,8 kJ/m$^2$

Zug - E-Modul :1520 MPa

maximale Zugfestigkeit ($\sigma_{max}$) : 27,0 MPa maximale Dehnbarkeit ($\varepsilon_{max}$) : 310%

Beispiel 6

Herstellung des cokontinuierlichen Blends B

In den Einzugstrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 190/220/240/ 240/240/240/240/230/220/210/200 °C, Drehzahl 120 U/ min, wird ein Polypropylen-Homopolymer (Daplen K2XMOD, Schmelzindex 8,0 g/10 min bei 230°C/2,16 kg, $\rho$ = 0,905 g/cm$^3$ bei 20°C) mit 1,05 kg/h und eine elastomere Polyolefinmischung aus 70 Masse% eines Styrol-Ethylen/Butadien-Styrol-Triblock-Copolymers (M$_n$=83700g/mol, Styrolgehalt 29 Masse%, M$_w$/ M$_n$=1,04, Polybutadien-Prepolymer mit 40% 1,2- und 60% 1,4-Verknüpfungen) und 30 Masse% eines amorphen Propylen-Homopolymers (Schmelzindex 4,5 g/10 min bei 230°C/2,16 kg, Schmelzenthalpie 38 J/g), auf die im Rhönradmischer 1,5 Masse% Vinyltriethoxysilan, 0,075 Masse% Dicumylperoxid und 0,05 Masse% Dibutylzinndilaurat, jeweils bezogen auf die elastomere Polyolefinmischung, mit 2,35 kg/h dosiert, aufgeschmolzen, homogenisiert, mit dem in der Reaktionsmischung enthaltenen Vinylsilan umgesetzt, entgast, bei einer Schmelzetemperatur von 215°C ausgetragen und granuliert.

Das resultierende cokontinuierliche Blend B besitzt einen Gehalt an gebundenem Vinyltriethoxysilan von 0,95 Masse% und einen Gelanteil von 55 Masse%.

Herstellung der heterophasigen Polyolefinlegierung

In den Einzugstrichter eines gleichsinnig drehenden, dichtkämmenden Zweischneckenextruders (Fa. Berstorff, ZE 25) mit gekühlter Einzugszone, Vacuumentgasung, L/D=48, Temperaturprofil 190/210/230 /230/230/230/220/220/210/200/190 °C, Drehzahl 200 U/min, wird ein Polypropylen-Homopolymer (Daplen K2XMOD, Schmelzindex 8,0 g/10 min bei 230°C/2,16 kg, $\rho$= 0,905 g/cm$^3$ bei 20°C) mit 2,7 kg/h und ein cokontinuierliches Blend B (Gehalt an gebundenem Vinyltriethoxysilan 0,95 Masse%, Gelanteil von 55 Masse%) mit 1,3 kg/h dosiert, unter hohen Deformationsgeschwindigkeiten homogenisiert, entgast, bei einer Schmelzetemperatur von 215°C ausgetragen und granuliert. Die resultierende heterophasige Polyolefinlegierung besitzt einen Gelanteil von 24,5%.

Durch Spritzgießen hergestellte Prüfkörper nach DIN ISO 3167 A besitzen folgende Eigenschaflen :

Kerbschlagzähigkeit (Charpy) bei -20°C : 9,5 kJ/m$^2$

Zug - E-Modul : 1320 MPa

maximale Zugfestigkeit ($\sigma_{max}$) : 22 MPa

maximale Dehnbarkeit ($\varepsilon_{max}$) : 165%

**Patentansprüche**

1. Heterophasige Polyolefinlegierungen mit semiinterpenetrierender Netzwerkstruktur und herausragender Kombination von hoher Steifigkeit, Tieftemperaturzähigkeit und gegebenenfalls niedrigem Wärmeausdehnungskoeffizienten aus 65 bis 99,6 Gew.% Propylenpolymeren und 35 bis 0,4 Gew.% elastomeren Polyolefinen bzw. Styrol-Ethylen-Butadien-Terpolymeren und gegebenenfalls 0,01 bis 2,5 Gew.% Stabilisatoren, 0,01 bis 1 Gew.% Verarbeitungshilfsmitteln,0,1 bis 1 Gew.% Antistatika, 0,2 bis 3 Gew.% Pigmenten, 0,05 bis 1 Gew.% Nukleierungsmitteln und/oder 2 bis 20 Gew.% Flammschutzmitteln, jeweils bezogen auf die Summe der Polymeren, als Hilfsstoffe, und/oder gegebenenfalls 10 bis 70 Gew.%, bevorzugt 20 bis 50 Gew.%, bezogen auf die Summe der Polymeren, anorganischen und/oder organischen Füll- und/oder Verstärkungsstoffen, **dadurch gekennzeichnet, dass** die heterophasigen Polyolefinlegierungen einen Gelanteil von

$$G_{HP} = 10^{-2}\ C_B\ [G_B + N\ (100 - G_B)]$$

dabei bedeuten

$G_{HP}$ = Gelanteil der heterophasigen Polyolefinlegierungen in Masse%

$C_B$ = Konzentration des cokontinuierlichen Blends B in der Polyolefinlegierung in Masse%

$G_B$ = Gelanteil des cokontinuierlichen Blends B in Masse%

$N$ = Nachvernetzungsfaktor = 0,10 bis 0,90

besitzen und durch Schmelzekompoundierung von 60 bis 98 Gew.% üblichen Propylenhomopolymeren bzw. Propylencopolymeren A mit Schmelzindices im Bereich von 0,1 bis 50 g/10 min bei 230 °C/2,16 kg mit 40 bis 2 Gew.% eines cokontinuierlichen Blends B, gegebenenfalls unter Zusatz von 0,01 bis 0,5 Gew.% Silanolkondensationskatalysatoren und/oder 0,01 bis 0,5 Gew.% Wasser, hergestellt wurden,
wobei die cokontinuierlichen Blends B auf

B1) übliche Propylenhomopolymere bzw. Propylencopolymere, das sind unter Anwendung von Ziegler-Natta-Katalysatoren oder Metallocenkatalysatoren hergestellte Propylenhomopolymere und/oder Copolymere aus Propylen, Ethylen und/oder $\alpha$-Olefinen mit 4 bis 18 C-Atomen mit einem Propylengehalt von 80,0 bis 99,9 Gew.% in Form von statistischen Copolymeren, Blockcopolymeren und/oder statistischen Blockcopolymeren, insbesondere Propylen-Homopolymere, mit Schmelzindices von 0,1 bis 50 g/10 min bei 230 °C/2,16 kg, bevorzugt 0,2 bis 15 g/10 min bei 230 °C/2,16 kg, enthaltende Zusammensetzungen basieren, in denen B1) im Gemisch mit 20 bis 90 Gew.% der elastomeren Polyolefine B2) und/oder B3) und/oder elastomeren Styrol-Ethylen-Butadien-Terpolymeren B5)

B2) Olefincopolymere aus 50 bis 95 Gew.% Ethylen und 50 bis 5 Gew.% Propylen und/oder $\alpha$-Olefinen mit 4 bis 18 C-Atomen und/oder ethylenisch ungesättigten Carbonsäureestern vom Typ Vinylacetat und/oder $C_{1-8}$-Alkyl-(meth)acrylaten mit Schmelzindices von 0,2 bis 30 g/10 min bei 190 °C/2,16 kg,

B3) weitgehend amorphe Polypropylene oder Propylen-Copolymere mit einem Anteil an kristallinen Polypropylenen bzw. kristallinen Propylen-Copolymeren unter 10 Masse%, einer Schmelzenthalpie unter 40 J/g und einem Schmelzindex von 0,1 bis 40 g/10 min bei 230 °C/2,16 kg, wobei das elastomere weitgehend amorphe Polypropylen ein Homopolymer des Propylens und/oder ein Copolymer des Propylens aus mindestens 80 Mol% Propylen und höchstens 20 Mol% eines oder mehrerer $\alpha$-Olefine der allgemeinen Formel $CH_2$=CHR ist, wobei R ein linearer oder verzweigter Alkylrest mit 2 bis 8 Kohlenstoffatomen ist,

B5) lineare Triblockcopolymere Styrol-Ethylen/Butadien-Styrol mit einem Gehalt an Ethylen von 5 bis 45 Masse% und an Styren von 15 bis 45 Masse% und einem Schmelzindex von 0,2 bis 30 g/10 min bei 190 °C/2,16 kg,

vorliegen,
die cokontinuierlichen Blends B einen Gehalt an chemisch gebundenen ethylenisch ungesättigten hydrolysierbaren Organosilanverbindungen von 0,1 bis 5,0 Gew.% und einen Gelanteil von 5 bis 60 Gew.%, bevorzugt 25 bis 50 Gew.% besitzen.

2. Heterophasige Polyolefinlegierungen nach Anspruch 1, **dadurch gekennzeichnet, dass** die in den cokontinuierlichen Blends B chemisch gebunden vorliegenden ethylenisch ungesättigten hydrolysierbaren Organosilanverbindungen $C_3$-$C_8$-Alkenyl-$C_1$-$C_2$-alkoxysilane, $C_2$-$C_{14}$-Alkenylhalogensilane, Amino-$C_2$-$C_5$-alkenylsilane, $C_6$-$C_8$-Cycloalkenylsilane, Methacryloxy - $C_1$-$C_3$-alkylsilane, Styryl - $C_1$-$C_2$-alkoxysilane, Vinyl - $C_1$-$C_4$-alkoxysilane und/oder Vinyl-$C_1$-$C_8$-carboxysilane, bevorzugt Vinyltrimethoxysilan und/oder Vinyltriethoxysilan, sind.

**3.** Verfahren zur Herstellung heterophasiger Polyolefinlegierungen mit semiinterpenetrierender Netzwerkstruktur und herausragender Kombination von hoher Steifigkeit, Tieftemperatu rzähigkeit und gegebenenfalls niedrigem Wärmeausdehnungskoeffizienten aus 65 bis 99,6 Gew.% Propylenpolymeren und 35 bis 0,4 Gew.% elastomeren Polyolefinen bzw. Styrol-Ethyten-Butadien-Terpolymeren und gegebenenfalls 0,05 bis 25 Masse% Hilfsstoffen und/oder 10 bis 70 Gew.%, jeweils bezogen auf die Summe der Polymeren, Füll- und/oder Verstärkungsstoffen, **dadurch gekennzeichnet, dass** die heterophasigen Polyolefinlegierungen durch Schmelzekompoundierung von 60 bis 98 Gew.% üblichen Propylenhomopolymeren bzw. Propylencopolymeren A mit 40 bis 2 Gew.% eines cokontinuierlichen Blends B, gegebenenfalls unter Zusatz von 0,01 bis 0,5 Gew.% Silanolkondensationskatalysatoren und/oder 0,01 bis 0,5 Gew.% Wasser, bevorzugt unter kontinuierlicher Zugabe der Propylenhomopolymeren bzw. Propylencopolymeren zu den cokontinuierliche Blends B, bei Temperaturen von 120 bis 270 °C, vorzugsweise bei 200 bis 240 °C, hergestellt werden, wobei die cokontinuierlichen Blends B auf

B1) übliche Propylenhomopolymere bzw. Propylencopolymere, das sind unter Anwendung von Ziegler-Natta-Katalysatoren oder Metallocenkatalysatoren hergestellte Propylenhomopolymere und/oder Copolymere aus Propylen, Ethylen und/oder $\alpha$-Olefinen mit 4 bis 18 C-Atomen mit einem Propylengehalt von 80,0 bis 99,9 Gew.% in Form von statistischen Copolymeren, Blockcopolymeren und/oder statistischen Blockcopolymeren, insbesondere Propylen-Homopolymere, mit Schmelzindices von 0,1 bis 50 g/10 min bei 230 °C/2,16 kg, bevorzugt 0,2 bis 15 g/10 min bei 230 °C/2,16 kg, enthaltende Zusammensetzungen basieren, in denen B1) im Gemisch mit 20 bis 90 Gew.% der elastomeren Polyolefine B2), B3) und/oder der elastomeren Styrol-Ethylen-Butadien-Terpolymeren B5)

B2) Olefincopolymere aus 50 bis 95 Gew.% Ethylen und 50 bis 5 Gew.% Propylen und/oder $\alpha$-Olefinen mit 4 bis 18 C-Atomen und/oder ethylenisch ungesättigten Carbonsäureestern vom Typ Vinylacetat und/oder $C_{1-8}$-Alkyl-(meth)acrylaten mit Schmelzindices von 0,2 bis 30 g/10 min bei 190 °C/2,16 kg,

B3) weitgehend amorphe Polypropylene oder Propylen-Copolymere mit einem Anteil an kristallinen Polypropylenen bzw. kristallinen Propylen-Copolymeren unter 10 Masse%, einer Schmelzenthalpie unter 40 J/g und einem Schmelzindex von 0,1 bis 40 g/10 min bei 230 °C/2,16 kg, wobei das elastomere weitgehend amorphe Polypropylen ein Homopolymer des Propylens und/oder ein Copolymer des Propylens aus mindestens 80 Mol % Propylen und höchstens 20 Mol % eines oder mehrerer $\alpha$-Olefine der allgemeinen Formel $CH_2=CHR$ ist, wobei R ein linearer oder verzweigter Alkylrest mit 2 bis 8 Kohlenstoffatomen ist,

B5) lineare Triblockcopolymere Styrol-Ethylen/Butadien-Styrol mit einem Gehalt an Ethylen von 5 bis 45 Masse% und an Styrol von 15 bis 45 Masse% und einem Schmelzindex von 0,2 bis 30 g/10 min bei 190 °C/2,16 kg,

vorliegt, und die cokontinuierlichen Blends B

1) entweder durch Umsetzung von Mischungen aus 10 bis 80 Gew.% üblichen Propylenhomopolymeren bzw. Propylencopolymeren und 90 bis 20 Gew.% elastomeren Polyolefinen bzw. Styrol-Etyhlen-Butadien-Terpolymeren mit 0,1 bis 5,0 Gew.% ethylenisch ungesättigten hydrolysierbaren Organosilanverbindungen in Gegenwart von 0,01 bis 1,0 Gew.% thermisch zerfallenden Radikalbildnem mit Halbwertszeiten von 1 min bis 48 h bei 130 °C, 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in kontinuierlichen Knetem in der Schmelze bei Temperaturen von 120 bis 270 °C, vorzugsweise bei 200 bis 240 °C, und Drükken von 1 bis 300 bar, vorzugsweise von 1 bis 30 bar, bei Verweilzeiten von 0,5 bis 40 min, vorzugsweise von 1 bis 15 min, hergestellt werden,

2) oder durch Umsetzung von Mischungen aus 6 bis 66 Gew.% üblichen Propylenhomopolymeren bzw. Propylencopolymeren und 94 bis 33 Gew.% elastomeren Polyolefinen bzw. Styrol-Ethylen-Butadien-Terpolymeren mit 0,1 bis 5,0 Gew.%, bezogen auf die elastomeren Polyolefine bzw. Styrol-Ethylen-Butadien-Terpolymere, an ethylenisch ungesättigten hydrolysierbaren Organosilanverbindungen in Gegenwart von 0,01 bis 1,0 Gew.%, bezogen auf die elastomeren Polyolefine bzw. Styrol-Ethylen-Butadien-Terpolymere, thermisch zerfallenden Radikalbildnern mit Halbwertszeiten von 1 min bis 48 h bei 130 °C in der Schmelze und Zugabe von weiteren 5 bis 40 Gew.%, bezogen auf die Polymermischung, üblichen Propylenhomopolymeren bzw. Propylencopolymeren und 0,01 bis 1,0 Gew.% Wasser, jeweils bezogen auf die elastomeren Polyolefine bzw. Styren-Ethylen-Butadien-Terpolymere, in kontinuierlichen Knetern in der Schmelze bei Temperaturen von 120 bis 270 °C, vorzugsweise bei 200 bis 240 °C, und Drücken von 1 bis 300 bar, vorzugsweise von 1 bis 30 bar, bei Verweilzeiten von 0,5 bis 40 min, vorzugsweise von 1 bis 15 min, hergestellt werden,

3) oder durch Umsetzung von elastomeren Polyolefinen bzw. Styrol-Ethylen-Butadien-Terpolymeren mit 0,1 bis 5,0 Gew.% ethylenisch ungesättigten hydrolysierbaren Organosilanverbindungen in Gegenwart von 0,01 bis 1,0 Gew.%, bezogen auf die elastomeren Polyolefine bzw. Styrol-Ethylen-Butadien-Terpolymere, thermisch zerfallenden Radikalbildnern mit Halbwertszeiten von 1 min bis 48 h bei 130 °C in kontinuierlichen Knetern in der Schmelze bei Temperaturen von 120 bis 270 °C, vorzugsweise bei 200 bis 240 °C, und Drücken von 1 bis 300 bar, vorzugsweise von 1 bis 30 bar, bei Verweilzeiten von 0,5 bis 40 min, vorzugsweise von 1 bis 15 min, hergestellt werden, wobei nachfolgend eine Granulierung und eine anschließende Schmelzecompoundierung von Mischungen aus 90 bis 20 Gew.% dieser modifizierten elastomeren Polyolefine bzw. Styrol-Ethylen-Butadien-Terpolymeren und 10 bis 80 Gew.% üblichen Propylenhomopolymeren bzw. Propylencopolymeren in Gegenwart von 0,01 bis 1,0 Gew.% Silanolkondensationskatalysatoren und gegebenenfalls 0,01 bis 1,0 Gew.% Wasser, jeweils bezogen auf die elastomeren Polyolefine bzw. Styrol-Ethylen-Butadien-Terpolymere, in kontinuierlichen Knetern in der Schmelze bei Temperaturen von 120 bis 270 °C, vorzugsweise bei 200 bis 240 °C, vorgenommen wird,

wobei ein Zusatz von 0,01 bis 2,5 Gew.% Stabilisatoren, 0,01 bis 1 Gew.% Verarbeitungshilfsmitteln, 0,1 bis 1 Gew.% Antistatika, 0,2 bis 3 Gew.% Pigmenten, 0,05 bis 1 Gew.% Nukleierungsmitteln und 2 bis 20 Gew.% Flammschutzmitteln, jeweils bezogen auf die Summe der Polymeren, als Hilfsstoffen, und/oder 10 bis 70 Gew.%, bevorzugt 20 bis 50 Gew.%, bezogen auf die Summe der Polymeren, anorganischen und/oder organischen Füll- ünd/oder Verstärkungsstoffen, bei der Herstellung der cokontinuierlichen Blends B und/oder bei der nachfolgenden Erzeugung der heterophasigen Polyolefinlegierungen erfolgen kann,
und wobei die üblichen Propylenhomopolymere bzw. Propylencopolymere A und die üblichen Propylenhomopolymere bzw. Propylencopolymere B1) gleich oder verschieden sein können.

4. Verfahren zur Herstellung heterophasiger Polyolefinlegierungen nach Anspruch 3, **dadurch gekennzeichnet, dass** bei der Herstellung der cokontinuierlichen Blends B als thermisch zerfallende Radikalbildner Dicumylperoxid, Cumyl-tert.butylperoxid, Di-tert.butylperoxid und/oder 2,5-Dimethyl-2,5-(di-tert.butylperoxy)hexan eingesetzt werden.

5. Verfahren zur Herstellung heterophasiger Polyolefinlegierungen nach Anspruch 3 oder 4, **dadurch gekennzeichnet, dass** als Silanolkondensationskatalysatoren bei der Herstellung der cokontinuierlichen Blends B und gegebenenfalls der heterophasigen Polyolefinlegierungen Oxide, Hydroxide und/oder Carbonsäuresalze der Metalle Sn, Ti, Zn, Zr, Fe, Cu und/oder Pb, bevorzugt Dibutylzinndilaurat, Dibutylzinndioktoat und/oder $C_1$- bis $C_{12}$-Dialkylzinnoxide, eingesetzt werden.

6. Verwendung heterophasiger Polyolefinlegierungen nach Anspruch 1 für die Herstellung von Folien, Fasern, Platten, Beschichtungen, Spritzgusskörpern, Rohren, Hohlkörpern und Schaumstoffen.

**Claims**

1. Heterophase polyolefin alloys having a semiinterpenetrating network structure and an excellent combination of high stiffness, low-temperature toughness and, if required, a low temperature coefficient of expansion, which consist of 65 to 99.6 % by weight of propylene polymers and 35 to 0.4 % by weight of elastomeric polyolefins or styrene-ethylene-butadiene terpolymers and, if required, 0.01 to 2.5 % by weight of stabilizers, 0.01 to 1 % by weight of processing agents, 0.1 to 1 % by weight of antistatics, 0.2 to 3 % by weight of pigments, 0.05 to 1 % by weight of nucleation agents and/or 2 to 20 % by weight of flameproofing agents, each related to the sum of the polymers, as auxiliary agents, and/or, if required, 10 to 70 % by weight, preferably 20 to 50 % by weight, related to the sum of the polymers, of inorganic and/or organic filling and/or reinforcing agents, **characterized in that** the heterophase polyolefin alloys have a gel content of

$$G_{HP} = 10^{-2} \, C_B \, [G_B + N \, (100 - G_B)]$$

where

$G_{HP}$ =    gel content of the heterophase polyolefin alloys, in % by weight

$C_B$ =    concentration of the cocontinuous blend B in the polyolefin alloy, in % by weight

$G_B$ =    gel content of the cocontinuous blend B, in % by weight

N = recross-linking factor = 0.10 to 0.90

and were manufactured by melt compounding 60 to 98 % by weight of usual propylene homopolymers or propylene copolymers A having melt indices ranging from 0.1 to 50 g/10 min at 230 °C/2.16 kg with 40 to 2 % by weight of a cocontinuous blend B, by adding 0.01 to 0.5 % by weight of silanol condensation catalysts and/or 0.01 to 0.5 % by weight of water if required, wherein the cocontinuous blends B are based on compositions containing

B1) usual propylene homopolymers or propylene copolymers, which are propylene homopolymers manufactured by using Ziegler-Natta catalysts or metallocene catalysts and/or copolymers of propylene, ethylene and/or $\alpha$-olefins having 4 to 18 C-atoms, which have a propylene content of 80.0 to 99.9 % by weight, in the form of random copolymers, block copolymers and/or random block copolymers, specifically propylene homopolymers, which have melt indices of 0.1 to 50 g/10 min at 230 °C/2.16 kg, preferably 0.2 to 15 g/10 min at 230 °C/2.16 kg, in which compositions B1) are present in the mixture with 20 to 90 % by weight of the elastomeric polyolefins B2) and/or B3) and/or with elastomeric styrene-ethylene-butadiene terpolymers B5),

B2) olefin copolymers of 50 to 95 % by weight of ethylene and 50 to 5 % by weight of propylene and/or $\alpha$-olefins having 4 to 18 C-atoms and/or ethylenically unsaturated carboxylic acid esters of the vinyl acetate type and/or $C_{1-8}$-alkyl (meth)acrylates having melt indices of 0.2 to 30 g/10 min at 190 °C/2.16 kg;

B3) substantially amorphous polypropylenes or propylene copolymers having a content of crystalline polypropylenes or crystalline propylene copolymers of less than 10 % by weight, an enthalpy of melting of less than 40 J/g and a melt index of 0.1 to 40 g/10 min at 230 °C/2.16 kg, the elastomeric, substantially amorphous polypropylene being a homopolymer of the propylene and/or a copolymer of the propylene which consists of at least 80 mole % of propylene and not more than 20 mole % of one or more $\alpha$-olefins of the general formula $CH_2$=CHR, where R is a linear or branched alkyl residue having 2 to 8 carbon atoms;

B5) linear triblock copolymers styrene-ethylene/butadiene-styrene having an ethylene content of 5 to 45 % by weight and a styrene content of 15 to 45 % by weight and a melt index of 0.2 to 30 g/10 min at 190 °C/2.16 kg

and the cocontinuous blends B have a content of chemically bonded, ethylenically unsaturated hydrolysable organosilane compounds of 0.1 to 5.0 % by weight and a gel content of 5 to 60 % by weight, preferably 25 to 50 % by weight.

2. The heterophase polyolefin alloys of Claim 1, wherein the ethylenically unsaturated hydrolysable organosilane compounds present in a chemically bonded state in the cocontinuous blends B are $C_3$-$C_8$-alkenyl $C_1$-$C_2$-alkoxy silanes, $C_2$-$C_{14}$-alkenyl halogenosilanes, amino-$C_2$-$C_5$-alkenyl silanes, $C_6$-$C_8$-cycloalkenyl silanes, methacryloxy-$C_1$-$C_3$-alkyl silanes, styryl $C_1$-$C_2$-alkoxy silanes, vinyl $C_1$-$C_4$-alkoxy silanes and/or vinyl $C_1$-$C_8$-carboxysilanes, preferably vinyl trimethoxy silane and/or vinyl triethoxy silane.

3. A method for manufacturing heterophase polyolefin alloys having a semiinterpenetrating network structure and an excellent combination of high stiffness, low-temperature toughness and, if required, a low temperature coefficient of expansion, which consist of 65 to 99.6 % by weight of propylene polymers and 35 to 0.4 % by weight of elastomeric polyolefins or styrene-ethylene-butadiene terpolymers and, if required, 0.05 to 25 % by weight of auxiliary agents and/or 10 to 70 % by weight, each related to the sum of the polymers, of filling and/or reinforcing agents, **characterized in that** the heterophase polyolefin alloys are manufactured by melt compounding 60 to 98 % by weight of usual propylene homopolymers or propylene copolymers A with 40 to 2 % by weight of a cocontinuous blend B, by adding 0.01 to 0.5 % by weight of silanol condensation catalysts and/or 0.01 to 0.5 % by weight of water if required, preferably by continuously adding the propylene homopolymers or propylene copolymers to the cocontinuous blends B, at temperatures of 120 to 270 °C, preferably at 200 to 240 °C, wherein the cocontinuous blends B are based on compositions containing

B1) usual propylene homopolymers or propylene copolymers, which are propylene homopolymers manufactured by using Ziegler-Natta catalysts or metallocene catalysts and/or copolymers of propylene, ethylene and/or $\alpha$-olefins having 4 to 18 C-atoms, which have a propylene content of 80.0 to 99.9 % by weight, in the form of random copolymers, block copolymers and/or random block copolymers, specifically propylene homopolymers, which have melt indices of 0.1 to 50 g/10 min at 230 °C/2.16 kg, preferably 0.2 to 15 g/10 min at 230 °C/2.16 kg,
in which compositions B1) are present in the mixture with 20 to 90 % by weight of the elastomeric polyolefins B2), B3) and/or the elastomeric styrene-ethylene-butadiene terpolymers B5),

B2) olefin copolymers of 50 to 95 % by weight of ethylene and 50 to 5 % by weight of propylene and/or α-olefins having 4 to 18 C-atoms and/or ethylenically unsaturated carboxylic acid esters of the vinyl acetate type and/or $C_{1-8}$-alkyl (meth)acrylates having melt indices of 0.2 to 30 g/10 min at 190 °C/2.16 kg;

B3) substantially amorphous polypropylenes or propylene copolymers having a content of crystalline polypropylenes or crystalline propylene copolymers of less than 10 % by weight, an enthalpy of melting of less than 40 J/g and a melt index of 0.1 to 40 g/10 min at 230 °C/2.16 kg, the elastomeric, substantially amorphous polypropylene being a homopolymer of the propylene and/or a copolymer of the propylene which consists of at least 80 mole % of propylene and not more than 20 mole % of one or more α-olefins of the general formula $CH_2$=CHR, where R is a linear or branched alkyl residue having 2 to 8 carbon atoms;

B5) linear triblock copolymers styrene-ethylene/butadiene-styrene having an ethylene content of 5 to 45 % by weight and a styrene content of 15 to 45 % by weight and a melt index of 0.2 to 30 g/10 min at 190 °C/2.16 kg

and the cocontinuous blends B are manufactured

1) either by converting mixtures of 10 to 80 % by weight of usual propylene homopolymers or propylene copolymers and 90 to 20 % by weight of elastomeric polyolefins or styrene-ethylene-butadiene terpolymers with 0.1 to 5.0 % by weight of ethylenically unsaturated hydrolysable organosilane compounds in the presence of 0.01 to 1.0 % by weight of thermally decomposing radical formers having a half-life of 1 min to 48 hrs at 130 °C, 0.01 to 1.0 % by weight of silanol condensation catalysts and, if required, 0.01 to 1.0 % by weight of water, each related to the elastomeric polyolefins or styrene-ethylene-butadiene terpolymers, in continuous kneaders in the melt at temperatures of 120 to 270 °C, preferably at 200 to 240 °C, and pressures of 1 to 300 bar, preferably 1 to 30 bar, with residence times of 0.5 to 40 min, preferably 1 to 15 min;

2) or by converting mixtures of 6 to 66 % by weight of usual propylene homopolymers or propylene copolymers and 94 to 33 % by weight of elastomeric polyolefins or styrene-ethylene-butadiene terpolymers with 0.1 to 5.0 % by weight, related to the elastomeric polyolefins or styrene-ethylene-butadiene terpolymers, of ethylenically unsaturated hydrolysable organosilane compounds in the presence of 0.01 to 1.0 % by weight, related to the elastomeric polyolefins or styrene-ethylene-butadiene terpolymers, of thermally decomposing radical formers having a half-life of 1 min to 48 hrs at 130 °C in the melt and by adding another 5 to 40 % by weight, related to the polymer mixture, of usual propylene homopolymers or propylene copolymers and 0.01 to 1.0 % by weight of water, each related to the elastic polyolefins or styrene-ethylene-butadiene terpolymers, in continuous kneaders in the melt at temperatures of 120 to 270 °C, preferably at 200 to 240 °C, and pressures of 1 to 300 bar, preferably 1 to 30 bar, with residence times of 0.5 to 40 min, preferably 1 to 15 min;

3) or by converting elastomeric polyolefins or styrene-ethylene-butadiene terpolymers with 0.1 to 5.0 % by weight of ethylenically unsaturated hydrolysable organosilane compounds in the presence of 0.01 to 1.0 % by weight, related to the elastomeric polyolefins or styrene-ethylene-butadiene terpolymers, of thermally decomposing radical formers having a half-life of 1 min to 48 hrs at 130 °C in continuous kneaders in the melt at temperatures of 120 to 270 °C, preferably at 200 to 240 °C, and pressures of 1 to 300 bar, preferably 1 to 30 bar, with residence times of 0.5 to 40 min, preferably 1 to 15 min, wherein mixtures of 90 to 20 % by weight of these modified elastomeric polyolefins or styrene-ethylene-butadiene terpolymers and 10 to 80 % by weight of usual propylene homopolymers or propylene copolymers in the presence of 0.01 to 1.0 % by weight of silanol condensation catalysts and, if required, 0.01 to 1.0 % by weight of water, each related to the elastomeric polyolefins or styrene-ethylene-butadiene terpolymers, in continuous kneaders in the melt at temperatures of 120 to 270 °C, preferably at 200 to 240 °C, are subsequently granulated and are then melt compounded,

wherein 0.01 to 2.5 % by weight of stabilizers, 0.01 to 1 % by weight of processing agents, 0.1 to 1 % by weight of antistatics, 0.2 to 3 % by weight of pigments, 0.05 to 1 % by weight of nucleation agents and/or 2 to 20 % by weight of flameproofing agents, each related to the sum of the polymers, as auxiliary agents, and/or 10 to 70 % by weight, preferably 20 to 50 % by weight, related to the sum of the polymers, of inorganic and/or organic filling and/or reinforcing agents may be added during the manufacture of the cocontinuous blends B and/or during the subsequent production of the heterophase polyolefin alloys,

and wherein the usual propylene homopolymers or propylene copolymers A and the usual propylene homopolymers or propylene copolymers B1) may be the same or different.

4. The method of manufacturing heterophase polyolefin alloys of Claim 3, wherein dicumyl peroxide, cumyl tert.butyl peroxide, di-tert.butyl peroxide and/ or 2,5-dimethyl-2,5-(di-tert.butyl peroxy)hexane are used as thermally decomposing radical formers in the manufacture of the cocontinuous blends B.

5. The method of manufacturing heterophase polyolefin alloys of Claim 3 or 4, wherein oxides, hydroxides and/or carboxylic acid salts of the metals Sn, Ti, Zn, Zr, Fe, Cu and/or Pb, preferably dibutyl tin (II) laurate, dibutyl tin(II) octoate and/or $C_1$- to $C_{12}$-dialkyl tin oxides, are used as silanol condensation catalysts in the manufacture of the cocontinuous blends B and, if required, of the heterophase polyolefin alloys.

6. Use of heterophase polyolefin alloys of Claim 1 for the manufacture of sheets, fibers, plates, coatings, injection-molded parts, tubes and pipes, hollow parts and foamed plastics.

## Revendications

1. Alliages polyoléfiniques formant une phase hétérogène avec une structure réticulée semi-interpénétrante et présentant une combinaison exceptionnelle d'une rigidité augmentée, d'une ténacité à basse température augmentée et, le cas échéant, d'un coefficient de dilatation thermique diminué, constitués de 65 à 99,6 % en poids de polymères du propylène, de 35 à 0,4 % en poids de polyoléfines élastomères ou de terpolymères styrène - éthylène - butadiène et, le cas échéant, en tant qu'agents auxiliaires, de 0,01 à 2,5 % en poids de stabilisants, de 0,01 à 1 % en poids d'adjuvants de fabrication, de 0,1 à 1 % en poids d'agents antistatiques, de 0,2 à 3 % en poids de pigments, de 0,05 à 1 % en poids d'agents de nucléation et / ou de 2 à 20 % en poids d'agents ignifuges (tous ces pourcentages sont donnés par rapport au total des polymères) et / ou, le cas échéant, de 10 à 70 % en poids et, de préférence, de 20 à 50 % en poids (par rapport au total des polymères) de charges et / ou d'agents de renforcement inorganiques et / ou organiques, ces alliages polyoléfiniques formant une phase hétérogène étant **caractérisés, en ce qu'**ils comportent une fraction de gel égale à

$$G_{HP} = 10^{-2} \, C_B \, [G_B + N \, (100 - G_B)]$$

où

$G_{HP} =$ fraction de gel dans les alliages polyoléfiniques formant une phase hétérogène, en % de poids

$C_B =$ concentration du mélange co-continu B dans l'alliage polyoléfinique, en % de poids

$G_B =$ fraction de gel du mélange co-continu B, en % de poids,

$N =$ facteur de post-réticulation = 0,10 à 0,90

et qu'ils sont obtenus par un malaxage d'une masse fondue constituée de 60 à 98 % en poids d'homopolymères usuels du propylène ou de copolymères usuels A du propylène, avec des indices de fusion dans la plage de 0,1 à 50 g / 10 min à 230 °C sous 2,16 kg, de 40 à 2 % en poids d'un mélange co-continu B et, le cas échéant, également de 0,01 à 0,5 % en poids de catalyseurs de condensation des silanols et / ou de 0,01 à 0,5 % en poids d'eau, où les mélanges co-continus B sont basés sur une composition contenant

B1) des homopolymères usuels du propylène ou des copolymères usuels du propylène, qui sont obtenus en faisant appel à des catalyseurs du type Ziegler-Natta ou à des catalyseurs du type métallocènes, en l'occurrence des homopolymères du propylène et / ou des copolymères du propylène, de l'éthylène et / ou d'α-oléfines ayant de 4 à 18 atomes de carbone, ayant une teneur en propylène de 80,0 à 99,9 % en poids et se présentant sous la forme de copolymères statistiques, de copolymères bloc et / ou de copolymères bloc statistiques et, en particulier, des homopolymères du propylène avec des indices de fusion de 0,1 à 50 g / 10 min à 230 °C sous 2,16 kg et, de préférence, de 0,2 à 15 g / 10 min à 230 °C sous 2,16 kg, cette composition B1) étant mélangée avec 20 à 90 % en poids de polyoléfines élastomères B2) et / ou B3) et / ou de terpolymères élastomères styrène - éthylène - butadiène B5), où

B2) correspond à des copolymères oléfiniques constitués de 50 à 95 % en poids d'éthylène et de 50 à 5 % en poids de propylène et / ou d'α-oléfines ayant de 4 à 18 atomes de carbone et / ou d'esters d'acides carboxyliques éthyléniquement insaturés du type acétate de vinyle et / ou (méth)acrylate d'alkyle en $C_1$ - $C_8$, avec des indices de fusion de 0,2 à 30 g / 10 min à 190 °C sous 2,16 kg,

B3) correspond à des polypropylènes essentiellement amorphes ou à des copolymères essentiellement amorphes du propylène, avec une fraction de polypropylène cristallin ou de copolymère du propylène cristallin inférieure à 10 % en poids, une enthalpie de fusion inférieure à 40 J / g et un indice de fusion de 0,1 à 40 g / 10 min à 230 °C sous 2,16 kg, où le polypropylène élastomère essentiellement amorphe est un homopolymère du propylène et / ou un copolymère du propylène contenant au moins 80 % en moles de propylène et au maximum 20 % en moles d'une ou de plusieurs $\alpha$-oléfines ayant la formule générale $CH_2$ = CHR, dans laquelle R est un résidu alkyle droit ou ramifié ayant de 2 à 8 atomes de carbone et

B5) correspond à un copolymère tri-bloc linéaire styrène - éthylène / butadiène - styrène avec une teneur en éthylène de 5 à 45 % en poids, une teneur en styrène de 15 à 45 % en poids et un indice de fusion de 0,2 à 30 g / 10 min à 190 °C sous 2,16 kg, et où les mélanges co-continus B ont une teneur en composés organo-silanes chimiquement liés, éthyléniquement insaturés et hydrolysables, de 0,1 à 5,0 % en poids et une fraction de gel de 5 à 60 % en poids et, de préférence de 25 à 50 % en poids.

2. Alliages polyoléfiniques formant une phase hétérogène selon la revendication 1, **caractérisés en ce que** les composés organo-silanes éthyléniquement insaturés et hydrolysables, présents chimiquement liés dans les mélanges co-continus B, sont des alcényl($C_3$ - $C_8$)alcoxy($C_1$ - $C_2$) silanes, des alcényl ($C_2$ - $C_{14}$)halogenosilanes, des aminoalcényl($C_2$ - $C_5$)silanes, des cycloalcényl($C_6$ - $C_8$)silanes, des méthacryloxy-alkyl($C_1$ - $C_3$)silanes, des styrylalcoxy($C_1$ - $C_2$)silanes, des vinylalcoxy($C_1$ - $C_4$)silanes et / ou des vinylcarboxy($C_1$ - $C_8$)silanes, la préférence allant au vinyltriméthoxysilane et / ou au vinyltriéthoxysilane.

3. Procédé de préparation d'alliages polyoléfiniques formant une phase hétérogène avec une structure réticulée semi-interpénétrante et présentant une combinaison exceptionnelle d'une rigidité augmentée, d'une ténacité à basse température augmentée et, le cas échéant, d'un coefficient de dilatation thermique diminué, constitués de 65 à 99,6 % en poids de polymères du propylène, de 35 à 0,4 % en poids de polyoléfines élastomères ou de terpolymères styrène - éthylène - butadiène et, le cas échéant, de 0,05 à 25 % en poids d'agents auxiliaires, et / ou de 10 à 70 % en poids (tous ces pourcentages sont donnés par rapport au total des polymères) de charges et / ou d'agents de renforcement, **caractérisé en ce que** ces alliages polyoléfiniques formant une phase hétérogène sont obtenus par le malaxage d'une masse fondue constituée de 60 à 98 % en poids d'homopolymères usuels du propylène ou de copolymères usuels A du propylène avec de 40 à 2 % en poids d'un mélange co-continu B, le cas échéant, avec en plus de 0,01 à 0,5 % en poids de catalyseurs de condensation des silanols et / ou de 0,01 à 0,5 % en poids d'eau, de préférence dans des conditions d'addition en continu des homopolymères du propylène ou des copolymères du propylène au mélange co-continu B, à des températures de 120 à 270 °C et, de préférence, de 200 à 240 °C,
où les mélanges co-continus B sont basés sur une composition contenant

B1) des homopolymères usuels du propylène ou des copolymères usuels du propylène, qui sont obtenus en faisant appel à des catalyseurs du type Ziegler-Natta ou à des catalyseurs du type métallocènes, en l'occurrence des homopolymères du propylène et / ou des copolymères du propylène, de l'éthylène et / ou d'$\alpha$-oléfines ayant de 4 à 18 atomes de carbone, ayant une teneur en propylène de 80,0 à 99,9 % en poids et se présentant sous la forme de copolymères statistiques, de copolymères bloc et / ou de copolymères bloc statistiques et, en particulier, des homopolymères du propylène avec des indices de fusion de 0,1 à 50 g / 10 min à 230 °C sous 2,16 kg et, de préférence, de 0,2 à 15 g / 10 min à 230 °C sous 2,16 kg, cette composition B1) étant mélangée avec 20 à 90 % en poids de polyoléfines élastomères B2), B3) et / ou de terpolymères élastomères styrène - éthylène - butadiène B5), où

B2) correspond à des copolymères oléfiniques constitués de 50 à 95 % en poids d'éthylène et de 50 à 5 % en poids de propylène et / ou d'$\alpha$-oléfines ayant de 4 à 18 atomes de carbone et / ou d'esters d'acides carboxyliques éthyléniquement insaturés du type acétate de vinyle et / ou de (méth)acrylate d'alkyle en $C_1$ - $C_8$, avec des indices de fusion de 0,2 à 30 g / 10 min à 190 °C sous 2,16 kg,

B3) correspond à des polypropylènes essentiellement amorphes ou à des copolymères essentiellement amorphes du propylène, avec une fraction de polypropylène cristallin ou de copolymère du propylène cristallin inférieure à 10 % en poids, une enthalpie de fusion inférieure à 40 J / g et un indice de fusion de 0,1 à 40 g / 10 min à 230 °C sous 2,16 kg, où le polypropylène élastomère essentiellement amorphe est un homopolymère du propylène et / ou un copolymère du propylène contenant au moins 80 % en moles de propylène et au maximum 20 % en moles d'une ou de plusieurs α-oléfines ayant la formule générale $CH_2 = CHR$, dans laquelle R est un résidu alkyle droit ou ramifié ayant de 2 à 8 atomes de carbone et

B5) correspond à un copolymère tri-bloc linéaire styrène - éthylène / butadiène - styrène avec une teneur en éthylène de 5 à 45 % en poids, une teneur en styrène de 15 à 45 % en poids et un indice de fusion de 0,2 à 30 g / 10 min à 190 °C sous 2,16 kg,

et où les mélanges co-continus B sont préparés

1) soit par la conversion d'un mélange de 10 à 80 % en poids d'homopolymères usuels du propylène ou de copolymères usuels du propylène et de 90 à 20 % en poids de polyoléfines élastomères ou de terpolymères styrène - éthylène - butadiène, par 0,1 à 5,0 % en poids de composés organo-silanes éthyléniquement insaturés et hydrolysables, en présence de 0,01 à 1,0 % en poids d'initiateurs radicalaires décomposables par la chaleur et ayant une demi-durée de vie de 1 min à 48 h à 130 °C, de 0,01 à 1,0 % en poids de catalyseur de condensation des silanols et, le cas échéant, de 0,01 à 1,0 % en poids d'eau (tous ces pourcentages sont donnés par rapport aux polyoléfines élastomères ou aux terpolymères styrène - éthylène - butadiène), dans des conditions d'un malaxage continu, avec une température de la masse fondue de 120 à 270 °C et, de préférence, de 200 à 240 °C, sous une pression de 1 à 300 bars et, de préférence, de 1 à 30 bars et avec un temps de résidence de 0,5 à 40 min et, de préférence de 1 à 15 min,

2) soit par la conversion d'un mélange de 6 à 66 % en poids d'homopolymères usuels du propylène ou de copolymères usuels du propylène et de 94 à 33 % en poids de polyoléfines élastomères ou de terpolymères styrène - éthylène - butadiène par 0,1 à 5,0 % en poids (par rapport aux polyoléfines élastomères ou aux terpolymères styrène - éthylène - butadiène), de composés organo-silanes éthyléniquement insaturés et hydrolysables, en présence, dans la masse fondue, de 0,01 à 1,0 % en poids (par rapport aux polyoléfines élastomères ou aux terpolymères styrène - éthylène - butadiène) d'initiateurs radicalaires décomposables par la chaleur et ayant une demi-durée de vie de 1 min à 48 h à 130 °C, avec addition, en plus, de 5 à 40 % en poids (par rapport au mélange de polymères) d'homopolymères usuels du propylène ou de copolymères usuels du propylène et de 0,01 à 1,0 % en poids d'eau (tous ces pourcentages sont donnés par rapport aux polyoléfines élastomères ou aux terpolymères styrène - éthylène - butadiène), dans des conditions d'un malaxage continu avec une température de la masse fondue de 120 à 270 °C et, de préférence, de 200 à 240 °C, sous une pression de 1 à 300 bars et, de préférence, de 1 à 30 bars, et avec un temps de résidence de 0,5 à 40 min et, de préférence, de 1 à 15 min,

3) soit par la conversion de polyoléfines élastomères ou de terpolymères styrène - éthylène - butadiène, par 0,1 à 5,0 % en poids de composés organo-silanes éthyléniquement insaturés et hydrolysables, en présence de 0,01 à 1,0 % en poids (par rapport aux polyoléfines élastomères ou aux terpolymères styrène - éthylène - butadiène) d'initiateurs radicalaires décomposables par la chaleur et ayant une demi-durée de vie de 1 min à 48 h à 130 °C, dans des conditions d'un malaxage continu, avec une température de la masse fondue de 120 à 270 °C et, de préférence, de 200 à 240 °C, sous une pression de 1 à 300 bars et, de préférence, de 1 à 30 bars et avec un temps de résidence de 0,5 à 40 min et, de préférence, de 1 à 15 min, où après une granulation, on effectue un malaxage d'une masse fondue constituée de 90 à 20 % en poids de cette polyoléfine élastomère modifiée ou de ce terpolymère modifié styrène - éthylène - butadiène et de 10 à 80 % en poids d'homopolymères usuels du propylène ou de copolymères usuels du propylène en présence de 0,01 à 1,0 % en poids de catalyseurs de condensation des silanols et, le cas échéant de 0,01 à 1,0 % en poids d'eau (tous ces pourcentages sont donnés par rapport aux polyoléfines élastomères ou aux terpolymères styrène - éthylène - butadiène) dans des conditions d'un malaxage continu, avec une température de la masse fondue de 120 à 270 °C et, de préférence, de 200 à 240 °C,

où - lors de la préparation des mélanges co-continus B et / ou lors de la préparation subséquente de l'alliage polyoléfinique formant une phase hétérogène - on peut effectuer une addition, en tant qu'agents auxiliaires, de 0,01 à 2,5 % en poids de stabilisants, de 0,01 à 1 % en poids d'adjuvants de fabrication, de 0,1 à 1 % en poids d'agents antistatiques, de 0,2 à 3 % en poids de pigments, de 0,05 à 1 % en poids d'agents de nucléation et de 2 à 20 % en poids d'agents ignifuges (tous ces pourcentages sont donnés par rapport au total des polymères) et / ou de 10 à 70 % en poids et, de préférence de 20 à 50 % en poids (par rapport au total des polymères) de charges et / ou d'agents de renforcement inorganiques et / ou organiques,

et où les homopolymères usuels du propylène ou les copolymères usuels A du propylène et les homopolymères usuels du propylène ou les copolymères usuels du propylène B1) peuvent être les mêmes ou différents.

4. Procédé de préparation des alliages polyoléfiniques formant une phase hétérogène selon la revendication 3, **caractérisé en ce que**, lors de la préparation des mélanges co-continus B, on utilise, en tant qu'initiateur radicalaire décomposable par la chaleur, le peroxyde de dicumyle, le peroxyde de cumyl-tert.butyle, le peroxyde de di-tert.butyle et / ou le 2,5-diméthyl-2,5-(di-tert.butylperoxy)hexane.

5. Procédé de préparation des alliages polyoléfiniques formant une phase hétérogène selon la revendication 3 ou la revendication 4, **caractérisé en ce que** l'on utilise, en tant que catalyseurs de condensation des silanols pour la préparation des mélanges B co-continus et, le cas échéant, des alliages polyoléfiniques formant une phase hétérogène, des oxydes, des hydroxydes et / ou des sels d'acides carboxyliques des métaux Sn, Ti, Zn, Zr, Fe, Cu et / ou Pb, la préférence allant au dilaurate de dibutylétain, au dioctoate de dibutylétain et / ou aux oxydes de dialkyl($C_1$ à $C_{12}$)étain.

6. Utilisation d'alliages polyoléfiniques formant une phase hétérogène selon la revendication 1 pour la réalisation de feuilles, de filaments, de plaques, de revêtements, d'éléments obtenus par moulage par injection, de tubes, de corps creux et d'articles expansés.